# EUROPEAN PATENT APPLICATION

(11) **EP 2 487 363 A1**
(43) Date of publication of application: **15.08.2012**
(21) Application number: 11152655.4
(22) Date of filing: 31.01.2011
(51) Int. Cl.: F03D 1/00, F03D 1/06

(54) **Lifting system and method for lifting rotor blades of wind turbines**

(71) Applicant: SIEMENS AKTIENGESELLSCHAFT, 80333 München (DE)
(72) Inventor: Krogh, Mikkel Verner, 7330 Brande (DK); Poulsen, Henning, 6900 Skjern (DK)

(57) **Abstract**

This invention describes a lifting system (1) for lifting rotor blades (2) of wind turbines, the lifting system (1) comprising a plurality of frame structures (4) each being configured to support a rotor blade (2). Additionally, the lifting system (1) comprises a lifting structure (25) which is attachable to a lifting device (3), and a number of lifting connectors (5) being configured to connect a pack (28) of frame structures (4) to the lifting structure (25). Furthermore, the invention describes a method for lifting rotor blades (2) of wind turbines by using a lifting device (3) and a method for installation of rotor blades (2) of wind turbines.

## Description

This invention relates to wind turbines. More particularly, the invention relates to a lifting system for lifting rotor blades of wind turbines. The invention further relates to a method for lifting rotor blades of wind turbines by using a lifting device. In addition, the invention relates to a method for installation of rotor blades of wind turbines.

Wind power is known to be used by human man kind since several thousand years, for example for transportation, grinding grains, or for the pumping of water. Since some time, the usage of wind energy gained significant relevance for the generation of electrical power. So-called wind turbines are applied to convert wind power into electrical power. A typical wind turbine comprises a tower and a nacelle which is mounted on top of the tower. The nacelle contains a generator which generates electrical power upon a rotation of a so-called rotor hub being connected to the generator. Furthermore, the wind turbine includes rotor blades which are attached to the rotor hub.

In order to achieve a good power conversion efficiency, wind turbines are preferably installed in areas, which are known for constant and relatively strong winds, like on hill tops or even in the open sea, off the coast line, i.e. off-shore. Furthermore, it is often desirable to place wind turbines away from housing areas so that noise, shadowing, and light flickering caused by the wind turbines is not annoying the residents. Consequently, wind turbines are often installed in quite remote regions. However, the manufacturing sites for wind turbines will not be located in those remote regions. As a result, means for transportation are required to haul the wind turbines from the manufacturing site to the installation site. Often, different transportation vehicles, like railcars, ships, aircrafts, helicopters or trucks have to be used to reach the installation site. Accordingly, beside the installation of the wind turbine, lifting operations for loading and unloading will take place. In general, a wind turbine is transported in multiple parts to the installation site and assembled at the installation site with installation equipment for lifting the wind turbine parts, like cranes. Typically, the parts that are transported separately comprise at least several parts for assembling the tower, the nacelle with the generator, the rotor hub, and a few rotor blades.

Another factor relating to wind power conversion efficiency is the size of wind turbines. To this end, the size of wind turbines has increased considerably over time. Today, wind turbines with an installed total height exceeding 190m and rotor blades reaching a length of 60m and more are known already. Correspondingly, the transporation of wind turbine parts is becoming more and more challenging. Especially, the transportation of rotor blades requires dedicated concepts, since the rotor blades are often relatively fragile, as they are normally implemented following a light-weight construction scheme.

The usage of large and often dedicated transportation vehicles involves relatively high costs, for example for hiring a large enough ship to transport the rotor blades to an off-shore installation site. Furthermore, especially for off-shore wind turbines, the transportation and assembly of the wind turbine parts could be quite dangerous, particularly in case of stronger winds or high sea. It is therefore desirable to establish means for a fast transportation, lifting, and assembly of wind turbines to reduce costs and risks associated with them.

It has already been suggested by EP1974995A1 to place rotor blades into containers with craddles which are housing the rotor blades, such that damage to the rotor blades is prevented during transportation. However, EP1974995A1 does not teach how to lift rotor blades being housed inside the described container. Also, EP1849719B1 discloses a transportation system for a wind turbine rotor blade comprising fixtures adapted to receive a rotor blade. Still, EP1849719B1 does not describe the lifting of rotor blades. Furthermore, EP1836389B1 suggests a packing device for the transport of pairs of wind turbine rotor blades but again does not disclose the lifting of rotor blades.

Therefore, it is an object of the present invention to provide a lifting system for rotor blades of wind turbines, and methods for lifting and for installation of rotor blades of wind turbines using such a system which allows a fast and reliable transportation and installation of rotor blades in a simple, inexpensive and low risk manner.

This object is achieved by the lifting system of claim 1, by the modular frame structure of claim 11, by the method for lifting rotor blades of claim 12, and by the method for installation of rotor blades of claim 15.

The invention describes a lifting system for lifting rotor blades of wind turbines in a lifting operation, wherein the lifting system comprises a plurality of frame structures for rotor blades, each of the frame structures being configured to support a rotor blade. The lifting system according to the invention further comprises a lifting structure which is attachable to a lifting device, and a number of lifting connectors which are being configured to connect a pack of frame structures to the lifting structure, preferably in a detachable manner.

Because, according to the invention, a pack comprising more than one rotor blade is lifted during a lifting operation, the lifting system supports a fast transportation and installation of rotor blades, thereby reducing the associated transportation and installation costs. Hereby, a pack of frame structures might consist of frame structures being placed horizontally side-by-side, or vertically on top of each other, or in a combination of horizontal and vertical placements.

Since the time needed for transportation and installation of wind turbines is reduced by the lifting system according to the invention, the risks being present in difficult environmental situations, like at an off-shore installation site, are reduced. Also, the lifting system makes beneficial use of frame structures which are supporting the rotor blades. Those frame structures can be configured such that they are suitable for transportation and lifting operations. Accordingly, it is not required to detach rotor blades from a frame structure suitable for transportation prior to or ahead of a lifting operation. As a result, transportation time and transportation costs can be reduced by re-using the frame structures for a lifting operation with a lifting system according to the invention. In addition, the frame structures can provide mechanical support and protection against damage during transportation. By re-using such frame structures for lifting operations according to the invention, the risks of damaging the rotor blades during a lifting operation can be reduced advantageously or even avoided at all.

The frame structures themselves can be configured in many ways. For instance, for supporting the relatively sensitive rotor blades, the frame structures might comprise flexible structures, like wires, ropes, or belts made of various materials. Hereby, the shape of the structures supporting the rotor blade can be configured such that they follow at least partly the shape of the rotor blade to provide a tight mechanical support. In particular, the supporting structures can be implemented in a craddle-like or tray-like configuration. In addition, a frame structure might comprise an outer shell or frame, which is more rigid in order to provide a mechanical support to the rotor blades and to protect them from damage. Those outer shells or frames might be made of metal, preferably steel, or other materials like wood, synthetics, plastic materials, glass fibres or carbon fibres.

The lifting structure, which is attached to the pack of frame structures by lifting connectors might support a reliable and safe lifting operation, since it can keep for example the lifting connectors at pre-defined positions during a lifting operation. Furthermore, the lifting structure can support a lifting operation such that the pack of frame structures is moved up and down in a stable fashion, e.g. such that the rotor blades are aligned substantially horizontally along their length during the lifting operation.

The lifting connectors can provide a flexible way of connecting a pack of frame structures to the lifting structure, which again supports fast and cost-effective lifting operations, especially if the lifting connectors are configured such that they can be attached and detached from the frame structures in a simple manner. Preferably, the lifting structure connects to a lifting device, like a crane or a winch, which is capable of lifting the lifting structure and the connected frame structures with the rotor blades. Hereby, the lifting device might be an integral part of the lifting system. Alternatively, the lifting device might be placed independently from the lifting system, for example a crane or winch which is part of a ship, a truck, a railcar, an aircraft, a helicopter or similar means of transportation. Also, the lifting device might be installed for example on the ground, on an off-shore platform, or at similar places.

The invention also describes a method for lifting rotor blades of wind turbines by using a lifting device and such a lifting system, wherein a frame structure is attached to each rotor blade such that the frame structure supports the rotor blade. The method comprises a step in which a plurality or group of frame structures is packed together to build a pack of frame structures. Also the method comprises steps for attaching a lifting structure to the lifting device, for connecting the pack of frame structures to the lifting structure with lifting connectors, and for lifting the pack of frame structures with the rotor blades by lifting the lifting structure with the lifting device. Hereby, it has to be understood that the method according to the invention might include as well the step of attaching the frame structure to each rotor blade.

In addition, the invention describes a method for installation of rotor blades of wind turbines, for example the installation of rotor blades for off-shore wind turbines, using and such a lifting system. Hereby, ahead of the installation, a frame structure is attached to each rotor blade such that the frame structure supports the rotor blade. The method according to the invention comprises a first step of lifting each rotor blade separately out of its frame structure. Further steps of the method comprise the installation of the rotor blades on the rotor hub of the wind turbine and the placement of each empty frame structure on a handling frame, preferably the handling frame of the nacelle of the wind turbine. Especially in an off-shore situation, but also in other installation situations where space is limited, like on a hill-top, the described method provides a benefit, since the empty frame structures are collected in a dedicated place and might then be transported back easily to be re-used for the transportation of further rotor blades. Particularly, space is saved at the installation site if a handling frame is employed for storing the empty rotor blade frame structures, which is already present at the installation site, for example the handling frame that was used to transport the nacelle of the wind turbine to the installation site. Assembling the empty frame structures on the handling frame in groups, especially in numbers corresponding to the number of rotor blades being employed for one wind turbine, is a preferred embodiment of the method according to the invention. For example, if a wind turbine comprises three rotor blades, assembling the empty frame structures in groups of three frame structures would be beneficial for the re-use of the frame structure in subsequent transportation and lifting operations.

The dependent claims and the subsequent description disclose particularly advantageous embodiments and features of the invention. Features of the embodiments may be combined as appropriate. Features described in the context of one claim category can apply equally to another claim category.

Preferably, a lifting system according to the invention is characterized by lifting connectors which are attached with a top end to the lifting structure. Furthermore, in this preferred embodiment of the invention, each of the lifting connectors is attached with a bottom end to at least one frame structure of the pack of frame structures comprising rotor blades. In a particular embodiment, the lifting connectors are connected only to the frame structures at the bottom of a pack of frame structures, thereby simplifying the process of attaching the lifting connectors to the frame structures ahead of a lifting operation as well as simplifying the process of detaching the lifting connectors from the frame structures at the end of a lifting operation. Hereby, other frame structures being located above the frame structures at the bottom of the pack would be simply lifted by lifting the frame structures at the bottom of the pack of frame structures. Similarly, in another corresponding embodiment, the lifting connectors might only be attached to the frame structures being located at the top of the pack of frame structures. Hereby, the other frame structures located below the frame structures at the top of the pack of frame structures are connected to the frame structures at the top of the pack of frame structures by mechanical connectors or fasteners. Consequently, a lifting operation would lift all the frame structures being connected to the frame structures on top of the pack of frame structures. Also, without leaving the scope of the invention, the lifting connectors might be connected to any of the frame structures located between the frame structure at the top and those at the bottom of a pack of frame structures.

In order to establish fast and cost-efficient lifting operations, the invention provides in another preferred embodiment lifting connectors which do comprise fixation devices which are configured to being attachable to and detachable from at least one of the frame structures of the pack of frame structures, preferably comprising a hook, a twist lock, or a screwable locking device. Such fixation devices will support a fast lifting of rotor blades, for example from a ship to an off-shore platform, since they enable a quick and convenient connection of the lifting structure to the pack of frame structure via the lifting connectors.

In another preferred embodiment, the lifting system according to the invention is characterized by frame structures which comprise hollow frame structure portions having openings, and by additional lifting brackets which are configured to penetrate a frame structure through an opening, preferably from a bottom side of a frame structure, especially from the bottom side of a pack of frame structures. Hereby, the lifting brackets do comprise a bracket connector which is configured to establish a connection with at least one of the lifting connectors, preferably with the fixation device of the lifting connector. The cross section of a hollow frame structure portion might hereby follow but is not limited to the shape of a retangle, a square, a circle, or an oval. Similarly, the opening of a hollow frame structure portion might be configured for example in a retangular, a square-like, a circular or an oval shape. In a preferred embodiment, the bracket connector is configured as a so-called pad-eye which is a widely known mechanical structure in the field of shipbuilding. Again, those lifting brackets will contribute to the desired fast and cost-effective attachment of lifting connectors to a frame structure or a pack of frame structures since the lifting brackets might be connected easily to the frame structures, for example by hooking the lifting brackets into the openings of the frame structures.

In a particularly preferred embodiment, the lifting brackets are comprising anchor or guide elements which are configured such that they fit inside an opening of a hollow frame structure portion and at least partly inside the hollow frame structure portion itself. Hereby, a close mechanical connection between the frame structures and the lifting brackets might be established, leading to a reliable lifting operation. Preferably, the anchor or guide elements are configured such that they tightly fit into the opening and the hollow frame structure portion. Particularly, the anchor elements might follow the shape of the opening and the shape of the hollow frame structure portion, i.e. the cross section of an anchor element might follow a retangular, a square-like, a circular or an oval shape. Also, such anchor elements are preferably characterized by a taper towards their tip which acts as a guide when an anchor element of a lifting bracket is inserted into the opening of a frame structure.

In addition, in another preferred embodiment of the invention, all or at least some of the lifting brackets comprise at least one pair of anchor elements, wherein each pair of anchor elements is spaced apart such that a single lifting bracket might be connected to at least two frame structures. Hereby, a first frame structure of a first rotor blade is aligned next to a second frame structure of a second rotor blade and the first anchor element of the pair of anchor elements is connected to the first frame structure while the second anchor element of a pair of anchor elements is connected to the second frame structure, for example by penetrating a hollow frame structure portion via an opening of each frame structure. Thereby, a lifting bracket advantageously provides a connection between the first and the second frame structure. Also, by sharing a lifting bracket between two frame structures, the number of lifting brackets required to lift multiple frame structures is reduced beneficially. Besides the described connection of two frame structures by a lifting bracket, a lifting bracket can also be applied to connect a frame structure and an auxiliary structure, for example a spacer structure which is placed in a space between two frame structures. Moreover, a lifting bracket can comprise one or multiple plates, for example steel plates, whereby the bracket connector and the anchor elements are attached to the plate, preferably by a welding connection.

In a further embodiment of the invention, a lifting system further comprises frame connectors connecting the frame structures to establish groups of connected frame structures. In a preferred embodiment, the groups of frame structures connected by frame connectors comprise three frame structures or multiple of three frame structures. Thereby, the logistics of transportation, like the distribution from the manufacturing site to the installation site, are largely simplified, since today, the majority of installed wind turbines comprise three rotor blades. The frame connectors can be for example an integral part of a frame structure, i.e. a first frame structure comprises mechanical structures, like bolts, pins, mandrels, or anchors which establish a connection to a second frame structure alinged next to the first frame structure. More particularly, the first frame structure can comprise extensions of its frame structure that fit into a hollow frame structure portion of the second frame structure, thereby establishing the desired connection of frames. Alternatively, separate mechanical fasteners can be applied as frame connectors, for example fasteners like bolts, screws, screwable locks, twist locks, or brackets. Those separate frame connectors can be installed only temporarily. For example, they might only be installed for a lifting operation with the lifting system according to the invention.

Preferably, the pack of frame structures of the lifting system according to the invention is configured such that the rotor blades of the pack of frames structures are aligned substantially in parallel along the length of the rotor blades. In this case, all of the rotor blades can be aligned in the same direction, which means that all root end portions of the rotor blades within a pack of frame structures would be aligned next to each other. Hereby, the root end of a rotor blade is defined as the part of a rotor blade which is connected to the rotor hub of a wind turbine once the wind turbine is assembled. Hence, a root end portion typically comprises means suitable for establishing a mechanical connection, i.e. bolts, screws, or boreholes. Alternatively, a pack of frame structures can comprise as well rotor blades which are aligned in opposing directions, i.e. a root end portion of one rotor blade can be located next to a tip end portion of another rotor blade. Hereby, the tip end of a rotor blade is defined as the portion of a rotor blade which is located farthest away from the rotor hub once the wind turbine is assembled.

In another embodiment of the lifting system, the frame structures are comprising at least two frame structure portions, preferably comprising a root end frame structure portion configured to support the rotor blade near its root end and comprising a tip end frame structure portion configured to support the rotor blade between its shoulder and its tip end. Hereby, the shoulder is defined as the portion of a rotor blade which exhibits the widest cross section along the length of a rotor blade. In a preferred embodiment, the root end frame structure portion is tightly coupled to the root end of the rotor blade. This coupling might be established by one or more than one dedicated coupling device at the root end frame structure portion which is tightly connected to portions of the root end of the rotor blade, for example to bolts, hooks, bore holes, openings, or screws. Preferably, the coupling device connects to portions of the root end of the rotor blade which are configured to establish the connection of the rotor blade with the rotor hub, like for example bolts, hooks, bore holes, openings, or screws. Furthermore, the tip end frame structure portion might comprise one or more than one supporting portion which is supporting the rotor blade in one or more directions. Such a supporting portion might be configured for example like a craddle, a tray, or a holder. In addition, the tip end frame structure portion might comprise one or more than one guiding portion as a fixation for a portion of the rotor blade, preferably as a fixation of a portion of the rotor blade where the rotor blade is tapering to a sharp point.

Also, it has to be understood that a frame structure is defined as a structure that includes the structure portions which are supporting a rotor blade. Accordingly, it is not required that the frame structure portions are linked together by some other portions of the frame structure. That means that a frame structure can comprise two or more than two portions which are only linked together by the rotor blade being supported by the frame structure. Furthermore, a pack of frame structures can contain additional auxiliary structures, like spacer structures. Those space structures are beneficially applied inside a pack of frame structures, if the frame structure portions are differing in their dimensions. For example, a root end frame structure can be larger compared to a tip end frame structure portion. Here, additional spacer structures can be positioned next to the tip end frame structure portions to compensate the mismatch in dimensions.

In a further embodiment of the invention, the lifting structure of the lifting system comprises at least two lifting beams which are connected to the top ends of the lifting connectors and further comprises a main beam which is connected to the lifting beams and the lifting device. Preferably, the lifting beams are aligned perpendicular along their length to the main beam, at least during a lifting operation. The connection between the main beam and the lifting beams can be established but is not limited to wire-, rope-, chain- or cord-like structures which are attached to the main and lifting beams by mechanical fasteners, like shackles, hooks, locks, or pad-eyes. Furthermore, in a particular embodiment, one of the lifting beams is connected to lifting connectors exlusively connecting to tip end frame structures portions while another lifting beam is connected to lifting connectors exlusively connecting to root end frame structures portions.

Preferentially, the lifting connectors are configured as a wire, a rope or a chain such that they provide at least a limited mechanical flexibility. Also, a lifting system according to the invention, can be characterized in that the frame structures and the lifting structure are substantially composed of metal, preferably steel.

For a particularly easy realisation of the invention, a modular frame structure system for a lifting system is provided, wherein the frame structure system comprises a plurality of frame structures each being configured to support a rotor blade. Furthermore, the modular frame structure system comprises frame connectors for connecting the frame structures to establish groups of connected frame structures, preferably groups comprising three frame structures or multiple of three frame structures.

A further preferred embodiment of the method for lifting rotor blades of wind turbines by using a lifting device is characterized in that the method further comprises a step before lifting the lifting structure wherein the frame structures are connected together by frame connectors to establish groups of connected frame structures, preferably groups comprising three frame structures or multiple of three frame structures. Preferably, the frame structures are connected such that the rotor blades of a group of connected frame structures are aligned substantially in parallel along the length of the rotor blades. Furthermore, in another embodiment of the method for lifting rotor blades, a pack of nine frame structures is established before lifting the group of rotor blades, the pack comprising a bottom, a middle, and a top group of frame structures, each of the three groups comprising three frame structures. In a further embodiment of the invention, two or more than two packs of frame structures as described above are lifted together in a lifting operation, for example from a vessel to a platform, to the ground, or to another transportation vehicle. Accordingly, in a single lifting operation, 18 or even more than 18 rotor blades would be lifted together, assuming that each pack comprises nine rotor blades. Thereby, the number or lifting operations required to unload a vessel is beneficially reduced.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a side view of a lifting system in accordance with an embodiment of the invention;
Figure 2 shows a cross-sectional view of a lifting system along a plane II-II in Figure 1 in accordance with an embodiment of the invention;
Figure 3 shows another cross-sectional view of a lifting system along a plane III-III in Figure 1 in accordance with an embodiment of the invention;
Figure 4 shows a further cross-sectional view of a lifting system along a plane IV-IV in Figure 1 in accordance with an embodiment of the invention;
Figure 5 shows detail V of Figure 2 in accordance with an embodiment of the invention;
Figure 6 shows detail VI of Figure 2 in accordance with an embodiment of the invention;
Figure 7 shows detail VII of Figure 1 in accordance with an embodiment of the invention; and
Figure 8 shows detail VIII of Figure 1 in accordance with an embodiment of the invention; and
Figure 9 shows detail IX of Figure 3 in accordance with an embodiment of the invention.
Figure 10 shows detail X of Figure 3 in accordance with an embodiment of the invention.

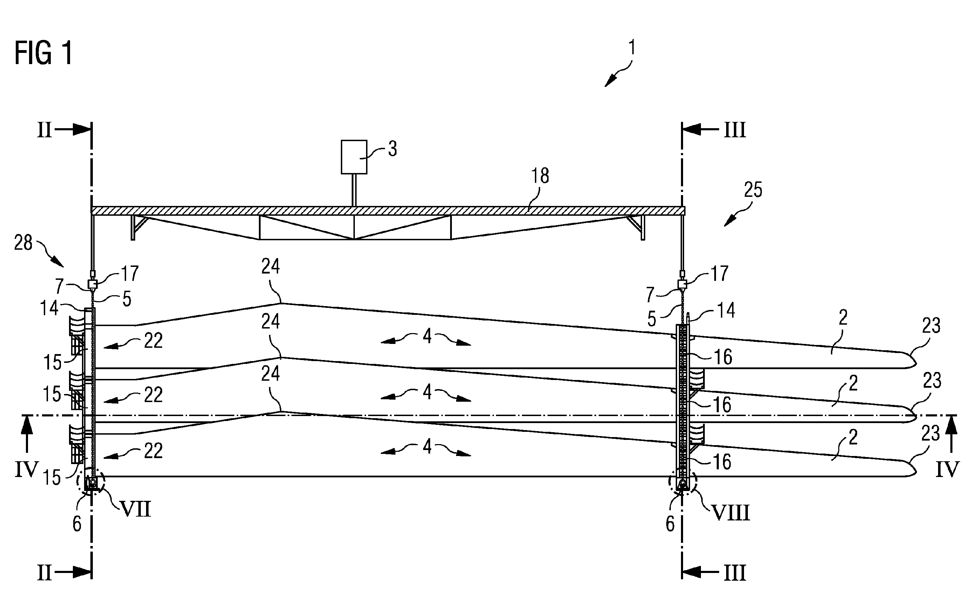

In Fig. 1, a side view of a lifting system 1 in accordance with an embodiment of the invention is depicted. For the sake of better clarity, in this and the subsequent figures not all structures are shown in detail. Particularly, the lifting device 3 is only depicted in a simplified manner.

The lifting device 3 is connected to a lifting structure 25, particularly to a main beam 18 by a mechnical connection, for example a chain, a wire, a rope, a belt, or a multitude of such mechanical connections. The main beam 18 might comprise mechanical fortifications, as indicated in Figure 1, thus providing sufficient stability to lift a pack 28 of frame structures 4. In addition, the main beam 18 is connected to two lifting beams 17 which are aligned substantially perpendicular along their length to the length of the main beam 18. Again, the mechanical connection between the main beam 18 and the lifting beams 17 might consist of chains, wires, ropes, belts or similar connectors. In addition, the mechanical connection between a main beam 18 and the lifting beams 17 might include fastening devices which support a fast assembly and disassembly of a lifting structure 25 containing a main beam 18 and lifting beams 17. Such fastening devices can be realized with twist locks, screwable locks, hooks, shakles, or similar devices. Even though Figure 1 shows exactly two lifting beams 17, other embodiments of the invention might include a single lifting beam 17 or more than two lifting beams 17 without leaving the scope of the invention. Also, the lifting structure 25 might as well be configured as a lifting frame, for example by four lifting beams 17 connected perpendicular to each other.

The lifting beams 17 are connected to some of the frame structures 4 of the pack 28 of frame structures 4 by lifting connectors 5. The lifting connectors 5 can be implemented either in a more rigid or in a more flexible configuration. Preferably, the lifting connectors 5 are comprising flexible elements simplifying the attachment and detachment of frame structures 4. For example, a lifting connector 5 might comprise a chain, a rope, a wire, or a belt. The top end 7 of each lifting connector 5 connects to a lifting beam 17. Thereby, the top end 7 of a lifting connector 5 might include fastening devices which support a fast attachment and detachment of a lifting connector 5. Such fastening devices can be realized with twist locks, screwable locks, hooks, shakles, or similar devices. The bottom ends 6 of the lifting connectors 5 shown in Figure 1 are connected to the bottom of the frame structures 4 located at the bottom of the pack 28 of frame structures 4.

Each of the frame structures 4 comprises a root end frame structure portion 15 and a tip end frame structure portion 16. Each root end frame structure portion 15 enclose a rotor blade 2 close to its root end 22 while the tip end frame structure portions 16 are enclosing a rotor blade 2 between its shoulder 24 and its tip end 23. The root end frame structure portions 15 as well as the tip end frame structure portions 16 are placed on top of each other thereby creating a pack 28 of frame structures 4. Hereby, frame connectors 14 which are part of each root end frame structure portion 15 and each tip end frame structure portion 16 are providing a mechanical support and alignment between neighbouring frame structures 4 since the frame connectors 14 of a lower frame structure 4 are fitting into a hollow frame portion of a frame structure 4 being placed on top of this frame structure 4.

For connecting a lifting connector 5 to a frame structure 4 the lifting connector 5 might either be located outside or within portions of the frame structure 4. The latter is shown in Figure 1 exemplarily for the lifting connector 5 which is being connected to a tip end frame structure portion 16, while the lifting connector 5 connected to a root end frame structure portion 15 is located outside the root end frame structure portion 15.

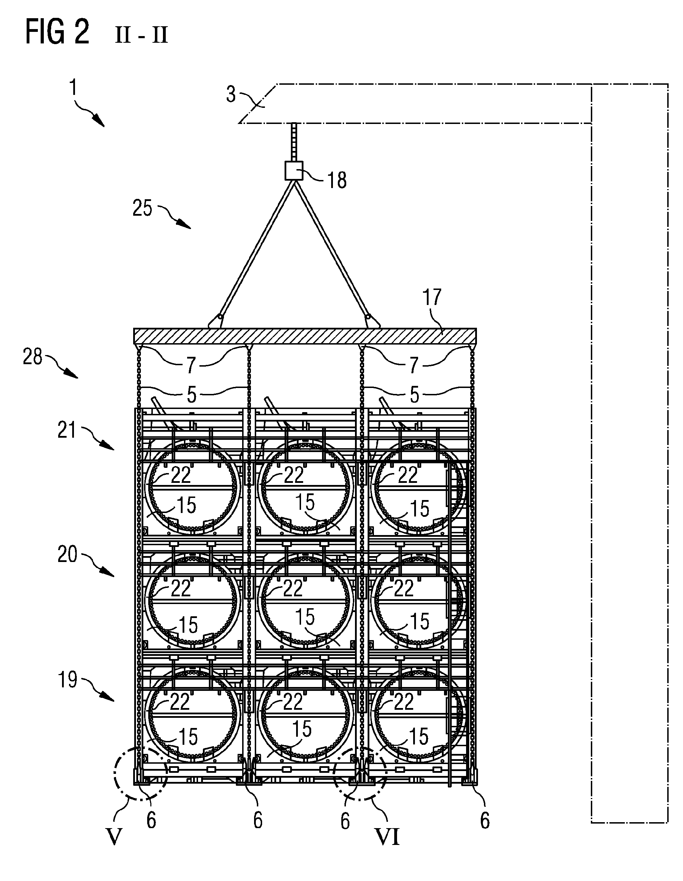

Figure 2 depicts a cross-sectional view of a lifting system 1 along a plane II-II in Figure 1, showing the root end frame structure portions 15 of the frame structures 4, each enclosing a root end 22 of a rotary blade 2. A pack 28 of nine frame structures 4 including nine rotor blades 2 is shown with three times three frame structures 4 aligned next to each other to form groups 19, 20, 21 of frame structures 4, with the root end frame structure portions 15 being visible here. A middle group 20 of root end frame structure portions 15 is located on top of a bottom group 19, while another top group 21 of root end frame structure portions 15 is located on top of the middle group 20. Four lifting connectors 5 are applied to connect the pack 28 of frame structures 4 to the lifting beam 17. Hereby, this embodiment of the invention beneficially shares lifting connectors 5 between two horizontally neighbouring root end frame structure portions 15. This means that each of the two lifting connectors 5 in the middle of the group of four lifting connectors 5 is connecting advantageously to two root end frame structure portions 15 at the bottom of the pack 28.

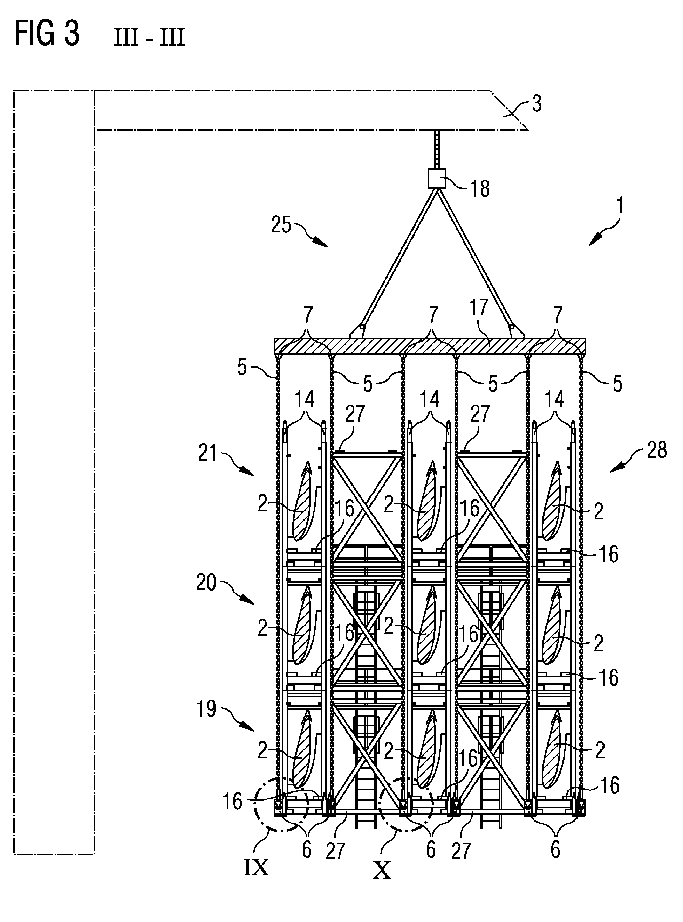

Figure 3 shows another cross-sectional view of a lifting system 1 along a plane III-III in Figure 1, showing the tip end frame structure portions 16 of the frame structures 4 each enclosing a rotary blade 2 between its shoulder 24 and its tip end 23. Again, the pack 28 of nine frame structures 4 including nine rotor blades 2 is shown with three times three frame structures 4 aligned next to each other forming groups 19, 20, 21 of frame structures 4, with the tip end frame structure portions 16 being visible here. Furthermore, six spacer structures 27 are depicted which are located inbetween a pair of tip end frame structure portions 16. Those spacer strucutres 27 beneficially compensate at least partly the smaller dimensions of the tip end frame structure portions 16 when compared to the dimensions of the root end frame structure portions 15. As a result, it is possible that a group of root end frame structure portions 15 has similar dimensions as the combination of a group of tip end frame structure portions 16 and spacer structures 27. Consequently, the spacer structures 27 can avoid undesired bending of the rotor blades 2 or an undesired touching of neighbouring rotor blades 2. Furthermore, it enables the usage of similarly or identically configured lifting beams 17. The lifting connectors 5 are connecting either to a tip end frame structure portion 16 located at the bottom of the pack 28 or to a pair of structures, consisting of a tip end frame structure portion 16 and a spacer structure 27.

Even though figures 1 to 3 have described lifting connectors 5 being connected to the frame structures 4 located at the bottom of a pack 28 of frame structures 4, it is within the scope of this invention to connect the lifting connectors 5 to other frame structures 4 or all frame structures 4 within a pack 28 of frame structures 4. For example, it is possible to connect lifting connectors 5 to the frame structures 4 located at the top of the pack 28 while frame connectors 14 establish a connection to the frame structures 4 below, thereby enabling the lifting of all frame structures 4 when the frame structures 4 at the top of the pack 28 are lifted by the lifting structure 25.

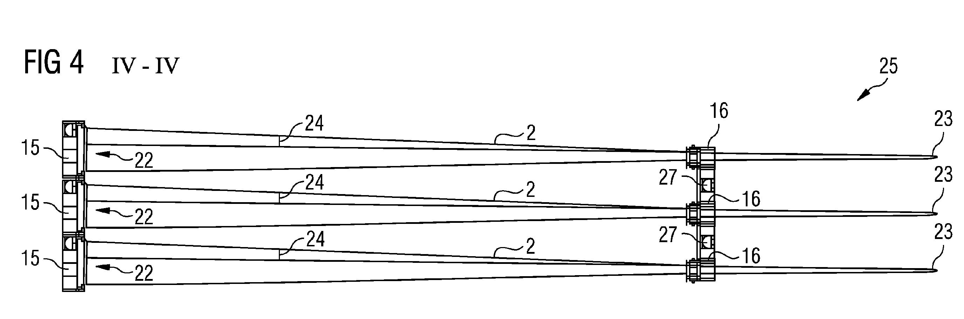

Figure 4 shows another cross-sectional view of a lifting system 1 along a plane IV-IV in Figure 1, with three root end frame structure portions 15, three tip end frame structure portions 16, and two spacer structures 27. Here it becomes obvious that the application of the spacer structures 27 beneficially keeps the rotor blades 2 in a straight, unbended configuration and prevents neighbouring rotor blades 2 from touching each other during the lifting operation.

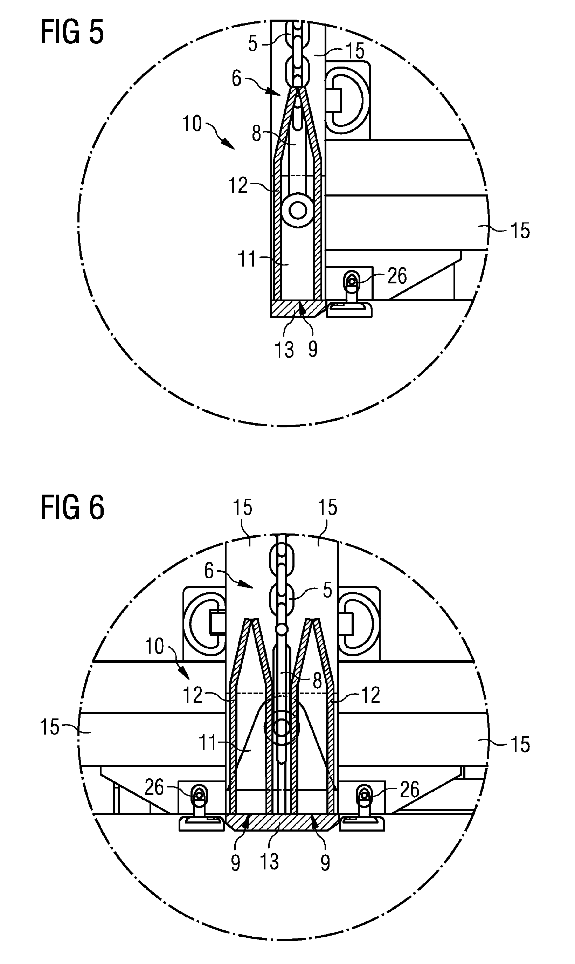

Figure 5 and 6 show two details V and VI of Figure 2 in accordance with an embodiment of the invention. Within Figure 5(detail V), a bottom end 6 of a lifting connector 5 is attached to the root end frame structure portion 15 of a frame structure 4. A connection is established between a fixation device 8 belonging to the bottom end 6 of the lifting connector 5 and a bracket connector 11 belonging to a lifting bracket 10. The lifting bracket 10 further comprises an anchor element 12 and a steel plate 13. The anchor element 12 penetrates a hollow frame portion of the root end frame structure portion 15 of the frame structure 4 via an opening 9. Hereby, the anchor element 12 is characterized by a taper at its tip which simplifies the insertion of the anchor element 12 into the opening 9 of the root end frame structure portion 15. In summary, the lifting connector 5 is connected to the root end frame structure portion 15 by the lifting bracket 10 in a flexible manner, thereby enabling a fast and simple attachment of lifting connectors 5 to frame structures 4. Furthermore, a twist lock 26 is shown in Figure 5A, which is mounted to a foundation, a platform, a deck, or a floor on which the pack 28 of frame structures 4 could be located. For example, the twist lock 26 can be employed to connect the pack 28 of frame structures 4 to the weather deck of a ship during the transportation of the rotor blades 2 to an off-shore installation site.

Similarly, Figure 6 (detail VI) depicts the connection of a lifting connector 5 to two root end frame structure portions 15 belonging to different rotor blades 2 by a lifting bracket 10. Here, the lifting bracket 10 provides a pair of anchor elements 12. Each of the anchor elements 12 penetrates a hollow portion of a root end frame structure portion 15 via an opening 9 at the bottom of the root end frame structure portion 15. Again, a bracket connector 11 is usable to connect the lifting bracket 10 to a fixation device 8 at the bottom end 6 of a lifting connector 5. A steel plate 13 is establishing the connection between the anchor elements 12 and the bracket connector 11. In such a configuration, it is possible to beneficially connect two root end frame structure portions 15 to a single lifting connector 5. Furthermore, by spacing the anchor elements 12 apart in a suitable distance, the lifting bracket 10 is also keeping the two root end frame structure portions 15 in an advantageous manner tightly together during a lifting operation. Also, twist locks 26 are shown providing support while the pack 28 of frame structures 4 is resting on the ground or on a platform of a transportation vehicle, like a ship or railcar.

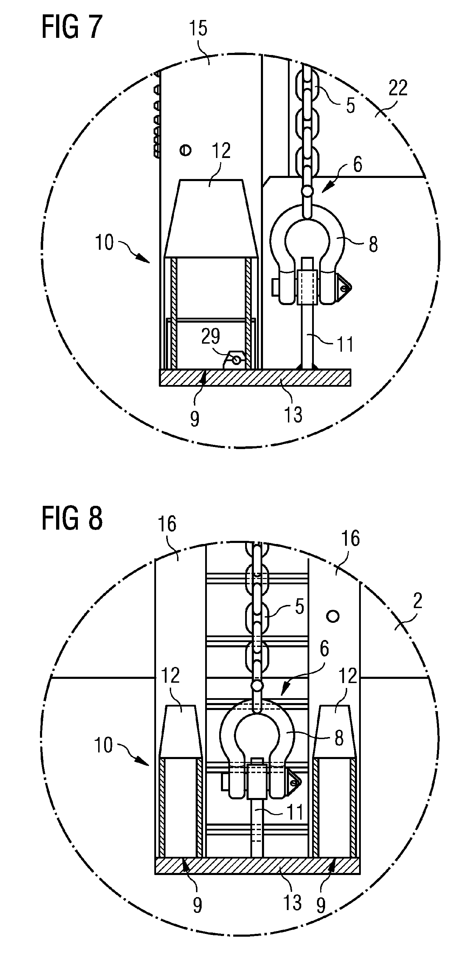

Figure 7 and 8 show two details VII and VIII of Figure 1. Hereby, Figure 7 (detail VII) is depicting a side view of Figure 5 with a lifting connector 5 connecting at its bottom end 6 via a fixation device 8 and a bracket connector 11 of a lifting bracket 10 to a tip end frame structure portion 16. The lifting bracket 10 comprises the described steel plate 13, the anchor element 12, and the bracket connector 11. The fixation device 8 is configured as a shackle and includes a screwable lock allowing a fast attachment and fast detachment of the lifting connector 5 to and from the lifting bracket 10. Furthermore, the bracket connector 11 is configured as a pad-eye which can receive the screw of the screwable lock of the fixation device 8.

Furthermore, Figure 8 (detail VIII) is showing a connection between a lifting connector 5 and a tip end frame structure portion 16. The lifting bracket 10 comprises two anchor elements 12 penetrating two hollow frame portions of the same tip end frame structure portion 16 via two openings 9. In contrast to Figure 6, the embodiment of Figure 8 provides a multitude of anchor elements to achieve a better mechanical connection to one and the same frame portion 16. Such a configuration is especially beneficial if the supporting frame structure 4 is relatively wide and consists of more than one frame portion along the length of the rotor blade 2.

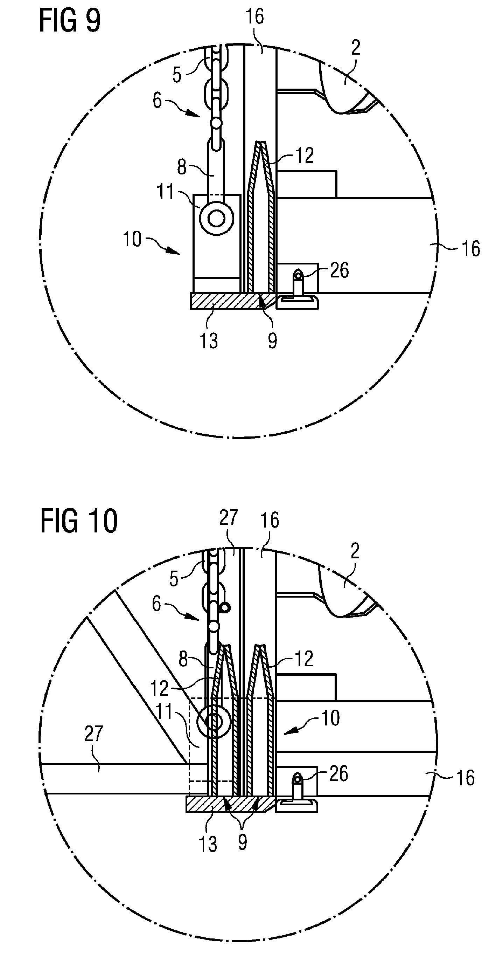

Finally, Figure 9 and 10 show two details IX and X of Figure 3 in accordance with an embodiment of the invention. Hereby, Figure 9 (detail IX) is depicting a side view of Figure 7, again with a lifting connector 5 connecting at its bottom end 6 via a fixation device 8 and a bracket connector 11 of a lifting bracket 10 to a tip end frame structure portion 16. Moreover, Figure 10 (detail X) is showing a lifting bracket 10 with two anchor elements 12, whereby the first anchor element 12 is penetrating a hollow portion of a tip end frame structure portion 16 while the second anchor element 12 is penetrating a hollow portion of the frame of a spacer structure 27. Thereby, a tight mechanical coupling of the spacer structure 27 and the tip end frame structure portion 16 is established by the lifting bracket 10, which beneficially supports the pack 28 of frame structures 4 during a lifting operation.

Although the present invention has been disclosed in the form of preferred embodiments and variations thereon, it will be understood that numerous additional modifications and variations could be made thereto without departing from the scope of the invention. For example, even though the figures describe a lifting system embodiment with nine rotor blades aligned next to each other, it can be easily conceived, that the invention applies to other numbers of rotor blades as well. Furthermore, the described systems and methods might be useful in many other areas where larger mechanical structures have to be transported and lifted in a simple and reliable fashion.

For the sake of clarity, it is also to be understood that the use of "a" or "an" throughout this application does not exclude a plurality, and "comprising" does not exclude other steps or elements. Also, a "unit" or "device" may comprise a number of blocks or devices, unless explicitly described as a single entity.

## Claims

1. A lifting system (1) for lifting rotor blades (2) of wind turbines, the lifting system (1) comprising
- a plurality of frame structures (4) each being configured to support a rotor blade (2),
- a lifting structure (25) which is attachable to a lifting device (3), and
- a number of lifting connectors (5) being configured to connect a pack (28) of frame structures (4) to the lifting structure (25).

2. A lifting system (1) according to claim 1, wherein, during a lifting operation,
- each of the number of lifting connectors (5) is attached with a bottom end (6) to at least one frame structure (4) of the pack (28) of frame structures (4), and
- the lifting structure (25) is attached to a top end (7) of each lifting connector (5).

3. A lifting system (1) according to claim 2, wherein the bottom end (6) of the lifting connectors (5) comprise fixation devices (8) configured to being attachable to and detachable from at least one of the frame structures (4), preferably comprising a hook, a twist lock, or a screwable locking device.

4. A lifting system (1) according to any of the claims 1 to 3, wherein the frame structures (4) comprise hollow frame structure portions having openings (9), and wherein the lifting system (1) further comprises lifting brackets (10) configured to penetrate a frame structure (4) through an opening (9), preferably from a bottom side of a frame structure (4), each lifting bracket (10) comprising a bracket connector (11) configured to establish a connection with at least one lifting connector (5).

5. A lifting system (1) according to claim 4, wherein the lifting brackets (10) comprise anchor elements (12) configured to fit inside an opening (9) and inside the hollow frame structure portions.

6. A lifting system (1) according to claim 5, wherein a first frame structure (4) of a first rotor blade (2) is aligned next to a second frame structure (4) of a second rotor blade (2) and wherein the lifting bracket (10) contains at least one pair of anchor elements (12), each pair of anchor elements (12) being spaced apart such that the first anchor element (12) of a pair fits inside the first frame structure (4) and the second anchor element (12) of a pair fits inside the second frame structure (4).

7. A lifting system (1) according to any of the claims 1 to 6, wherein the lifting system (1) further comprises frame connectors connecting the frame structures (4) to establish groups (19, 20, 21) of connected frame structures (4), preferably groups (19, 20, 21) comprising three frame structures (4) or multiple of three frame structures (4).

8. A lifting system (1) according to any of the claims 1 to 7, wherein the pack (28) of frame structures (4) is configured such that the rotor blades (2) of the pack (28) of frames structures (4) are aligned substantially in parallel along the length of the rotor blades (4).

9. A lifting system (1) according to any of the claims 1 or 8, wherein a frame structure (4) comprises at least two frame structure portions (15, 16), preferably comprising a root end frame structure portion (15) configured to support the rotor blade (4) near its root end (22) and comprising a tip end frame structure portion (16) configured to support the rotor blade between its shoulder (24) and its tip end (23).

10. A lifting system (1) according to any of the claims 1 to 9, wherein the lifting structure (25) comprises at least two lifting beams (17) being connected to the top ends (7) of the lifting connectors (5) and further comprises a main beam (18) being connected to the lifting beams (17) and the lifting device (3).

11. A modular frame structure system for a lifting system (1) according to any of the claims 1 to 10, the frame structure system comprising
- a plurality of frame structures (4) each being configured to support a rotor blade (2), and
- frame connectors for connecting the frame structures (4) to establish groups of connected frame structures (19, 20, 21), preferably groups (19, 20, 21) comprising three frame structures (4) or multiple of three frame structures (4).

12. A method for lifting rotor blades (2) of wind turbines by using a lifting device (3), wherein a frame structure (4) is attached to each rotor blade (2) such that the frame structure (4) supports the rotor blade (2), the method comprising the steps of:
- packing a plurality of frame structures (4) together to build a pack (28) of frame structures (4),
- attaching a lifting structure (25) to the lifting device (3),
- connecting the pack (28) of frame structures (4) to the lifting structure (25) with lifting connectors (5), and
- lifting the pack (28) of frame structures (4) with the rotor blades (2) by lifting the lifting structure (25) with the lifting device (3).

13. A method according to claim 12, wherein the method further comprises a step before lifting the lifting structure (25), wherein the frame structures (4) are connected together by frame connectors to establish groups (19, 20, 21) of connected frame structures (4), preferably groups (19, 20, 21) comprising three frame structures (4) or multiple of three frame structures (4).

14. A method according to claim 13, **characterized in that** the frame structures (4) are connected such that the rotor blades (2) of a group (19, 20, 21) of connected frame structures (4) are aligned substantially in parallel along the length of the rotor blades (2).

15. A method for installation of rotor blades (2) of wind turbines, wherein, prior to the installation, a frame structure (4) is attached to each rotor blade (2) such that the frame structure (4) supports the rotor blade (2), the method comprising the steps of:
- lifting each rotor blade (2) separately out of its frame structure (4),
- installing the rotor blades (2) on a rotor hub of the wind turbine, and
- placing each empty frame structure (4) on a handling frame, preferably a handling frame of a nacelle of a wind turbine.
